Europäisches Patentamt

European Patent Office

Office européen des brevets

(19)

(11) Numéro de publication : **0 043 766**
**B1**

(12) **FASCICULE DE BREVET EUROPÉEN**

(45) Date de publication du fascicule du brevet :
07.11.84

(51) Int. Cl.³ : **G 21 C 11/08**

(21) Numéro de dépôt : **81401061.7**

(22) Date de dépôt : **01.07.81**

(54) Dispositif de réduction des contraintes thermiques sur la virole d'un appareil baignant dans le bain de métal alcalin liquide d'un réacteur nucléaire à neutrons rapides.

(30) Priorité : 03.07.80 FR 8014841

(43) Date de publication de la demande :
13.01.82 Bulletin 82/02

(45) Mention de la délivrance du brevet :
07.11.84 Bulletin 84/45

(84) Etats contractants désignés :
BE DE FR GB IT NL

(56) Documents cités :
DE-A- 2 538 628
FR-A- 2 036 828
FR-A- 2 283 518
FR-A- 2 316 704
GB-A- 2 018 401
US-A- 1 714 948
US-A- 3 089 520

(73) Titulaire : STEIN INDUSTRIE Société Anonyme dite:
19-21, avenue Morane Saulnier
F-78140 Velizy Villacoublay (FR)

(72) Inventeur : Vidard, Michel
Les Cerisiers Bt.C 49 ter, Avenue Saint Jérôme
F-13000 Aix en Provence (FR)
Inventeur : Goldstein, Stéphane
27, Allée du Lavoir Chevry 2
F-91190 Gif-sur-Yvette (FR)
Inventeur : Salon, Guy
9, rue Vernat Résidence Etoile
F-78150 Le Chesnay Parly II (FR)
Inventeur : Semedard, Jean-Claude
184, Avenue de Choisy
F-75013 Paris (FR)

(74) Mandataire : Mongrédien, André et al
c/o BREVATOME 25, rue de Ponthieu
F-75008 Paris (FR)

EP 0 043 766 B1

Jouve, 18, rue St-Denis, 75001 Paris, France

**Description**

La présente invention concerne un dispositif de réduction des écarts de température et des contraintes thermiques sur la virole d'un appareil baignant dans le bain de métal alcalin liquide d'un réacteur nucléaire à neutrons rapides et traversant la dalle surmontant ce bain.

On a observé sur de tels appareils, notamment sur des échangeurs dont la partie basse, en contact avec un bain de métal alcalin (tel que le sodium) réchauffé dans le réacteur nucléaire, est à une température de l'ordre de 550 °C, et la partie supérieure, un peu au-dessous de la dalle en béton de protection, à une température de l'ordre de 100 °C, l'apparition de dilatations angulairement dissymétriques dues à une transmission de chaleur à la virole par le gaz rare qui surmonte le bain de métal alcalin liquide. Il se forme en effet une circulation par thermosiphon du gaz rare, qui s'élève le long de la virole de l'appareil en se refroidissant. Parvenu au niveau du plan de pose de l'appareil à une température de l'ordre de 150 °C, le gaz rare redescend vers le bain de métal alcalin liquide. Or, il a été constaté par le Demandeur que les courants de gaz rare s'établissaient de telle façon qu'une ou plusieurs génératrices de la virole de l'appareil étaient au contact du gaz en circulation ascendante et que d'autres génératrices étaient au contact du gaz en circulation descendante. Ceci entraîne une dissymétrie de température sur le pourtour de la virole porteuse et des écarts de température à un même niveau horizontal donné entre des génératrices de position angulaire différentes, avec pour conséquence des déformations du type dit «mise en banane». De telles déformations, préjudiciables à un fonctionnement correct de l'appareil, peuvent dépasser la limite élastique et devenir permanentes.

La présente invention a pour but de remédier à ces inconvénients, et de procurer un dispositif qui réduise suffisamment les écarts de température précédents et donc les contraintes thermiques pour qu'elles ne perturbent pas le fonctionnement de l'appareil et qu'elles restent bien au-dessous de la limite élastique.

Le dispositif selon l'invention est caractérisé en ce que la virole est munie de moyens d'homogénéisation de la température sur son pourtour, comprenant une virole interne et une série de plaques métalliques perpendiculaires à l'axe de la virole disposées en couronnes horizontales échelonnées verticalement sur le pourtour de ladite virole, entre celle-ci et une chemise externe, et assurant en même temps une protection biologique contre le rayonnement radioactif, l'espace compris entre la virole et la virole interne étant rempli d'un gaz neutre, tel que l'argon.

Il répond en outre de préférence à au moins l'une des caractéristiques suivantes, permettant de supprimer les éventuels thermosiphons non axisymétriques qui pourraient s'établir entre la virole et la chemise externe :

Les plaques métalliques en couronne sont supportées à l'extrémité inférieure de tiges verticales formant entretoises réparties sur le pourtour de la virole entre celle-ci et la chemise externe, et solidaires d'une bride fixée à ladite virole.

Les bords internes des plaques métalliques en couronne sont espacés de quelques millimètres de la virole.

Certaines des plaques métalliques sont munies sur leur bord interne d'un joint métallique d'étanchéité.

Les plaques métalliques sont divisées en groupes comportant chacune une virole externe commune espacée de quelques millimètres de la chemise externe.

Entre deux groupes de plaques adjacentes est intercalée une plaque munie d'un joint d'étanchéité sur son bord externe.

Il comprend, lorsque l'appareil est un échangeur de chaleur vertical entre un circuit primaire de métal alcalin liquide réchauffé dans le réacteur nucléaire et un circuit secondaire de métal alcalin liquide destiné à transmettre un flux de chaleur à un circuit de vapeur, des moyens de circulation d'un gaz d'échange de chaleur au contact de la virole de l'échangeur, et une couche de calorifuge entre d'une part lesdits moyens de circulation du gaz et la virole externe et d'autre part le métal alcalin liquide secondaire réchauffé. Ces moyens de circulation sont constitués de préférence par un serpentin au contact de la paroi interne de la virole externe.

Il est décrit ci-après, à titre d'exemples et en référence aux figures du dessin annexé, des dispositions de réduction des contraintes thermiques sur le pourtour d'un échangeur entre circuits de sodium primaire et de sodium secondaire assurant la transmission de chaleur d'un réacteur nucléaire à neutrons rapides à un circuit de vapeur.

La figure 1 représente en élévation avec arrachement partiel l'échangeur de chaleur entre les circuits de sodium primaire et secondaire.

La figure 2 représente le détail d'un dispositif de réduction des contraintes thermiques à virole interne et plaques métalliques en couronne.

La figure 3 représente le détail d'un dispositif de réduction des contraintes thermiques comprenant un serpentin de circulation de gaz au contact de la virole et un calorifuge entre celle-ci et une virole interne.

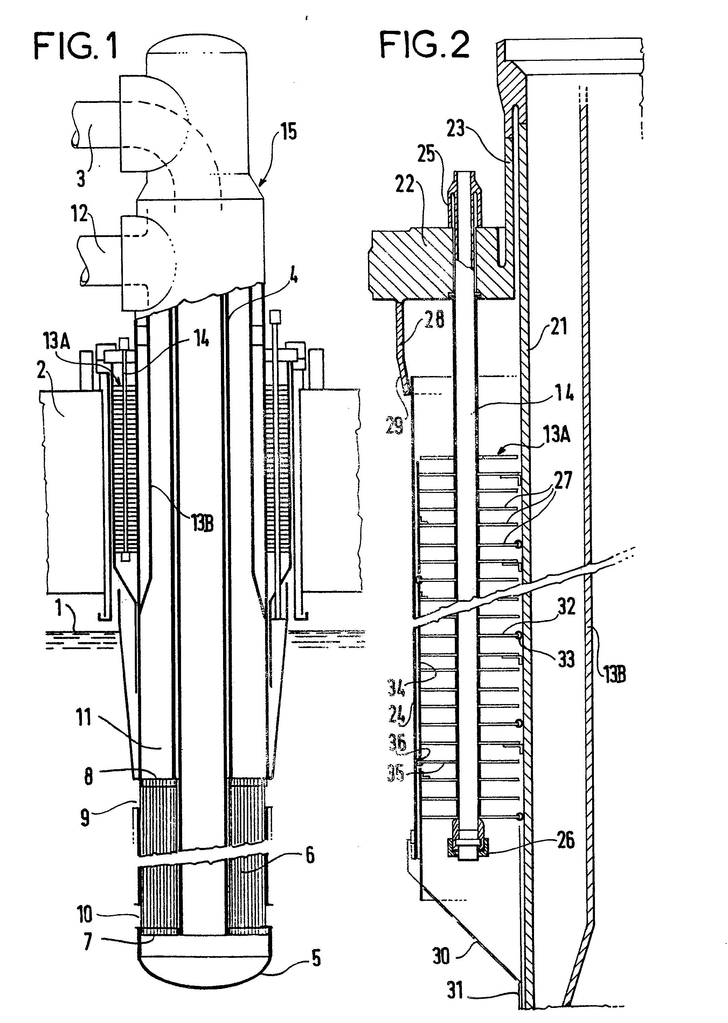

Dans la figure 1, le bain 1 de sodium liquide dans la cuve du réacteur est surmonté de la dalle de protection en béton 2. L'arrivée du sodium liquide secondaire se fait dans la tête 15 de l'échangeur par le conduit 3, qui se prolonge à l'intérieur de l'échangeur par la virole interne 4. Le fond 5 de l'échangeur est surmonté par un faisceau tubulaire annulaire 6 à plaques tubulaires inférieure 7 et supérieure 8. Le sodium primaire pénètre autour des tubes du faisceau tubulaire par l'ouverture 9 et ressort refroidi par l'ouverture 10. La plaque tubulaire supérieure 8 est surmontée d'un conduit annulaire 11 d'évacuation du sodium secondaire réchauffé, qui quitte l'échangeur par le conduit 12. L'ensemble du dispositif de réduction des contraintes sur le pourtour de l'échangeur est représenté en 13A et 13B, avec ses tubes de suspension tels que 14.

Dans le détail de la figure 2, la virole 21 de l'échangeur est reliée par l'intermédiaire d'une jupe mince 23 à une bride 22 reposant sur la dalle de protection en béton, non représentée.

La virole 21 est entourée d'une chemise mince 24, à l'intérieur de laquelle est disposé le dispositif 13A tendant à réduire les courants de convection d'argon chaud. A cet effet, les tubes 14 portant des bagues entretoises non représentées pour supporter les plaques 27 sont accrochés par des supports 25 à la bride 22, et munis à leur extrémité inférieure de bouchons 26 de support de colonnes de plaques métalliques 27 en couronne, échelonnées verticalement à écartement constant. Ces plaques sont espacées du pourtour de la virole 21 par un jeu de quelques millimètres, et à intervalles réguliers, certaines des plaques métalliques 32 sont munies sur leur bord interne d'un joint métallique d'étanchéité 33 de façon à réduire au maximum la circulation d'argon du bas vers le haut le long de la paroi externe de la virole externe 21. Les plaques sont par ailleurs divisées dans le sens de la hauteur en groupes comportant chacun une virole externe commune telle que 34, espacée de quelques millimètres de la chemise externe 24. Entre deux groupes, une plaque intercalaire telle que 35 est munie sur son bord externe d'un joint métallique d'étanchéité 36.

Ces plaques peuvent en outre être traversées en certains points d'organes tubulaires de contrôle ou de commande, par exemple de détecteurs de rupture de gaines, dont elles sont alors indépendantes. Les tubes 14 peuvent servir au passage d'organes de contrôle du réacteur nucléaire. Au-dessus de la colonne de plaques, la bride 22 comporte une lèvre (non étanche) 28 à extrémité 29, réduisant dans une large mesure la circulation d'argon de l'intérieur de l'enveloppe 24 vers l'extérieur. A son extrémité inférieure, la chemise 24 se raccorde par une surface tronconique 30 à une enveloppe 24 se raccorde par une surface tronconique 30 à une enveloppe 31 très proche de la virole 21, et formant chicane sur le trajet de l'argon au voisinage de la surface du sodium liquide.

Les plaques 27 assurent une fonction de calorifuge de la virole de l'échangeur en atténuant le rayonnement et en maintenant une zone d'argon presque immobile au voisinage de la virole de l'échangeur ; elles assurent également par conduction circonférentielle et par rayonnement mutuel un effet d'homogénéisation circonférentielle de la température de la virole 21 de l'échangeur. Cette homogénéisation circonférentielle est assurée par ailleurs par l'effet de rayonnement de la virole 13B qui se trouve à la température du sodium secondaire sortant de l'échangeur. Entre la virole externe 21 à protéger et la virole interne 13B se trouve une atmosphère de gaz neutre, par exemple de l'argon, qui crée une couche relativement isolante vis-à-vis du transfert de chaleur par conduction. Les plaques 27 jouent en outre le rôle de protection biologique contre le rayonnement de radio-activité provenant de la couverture d'argon primaire actif, par le grand nombre d'écrans qu'elles interposent sur le trajet vertical de ce rayonnement le long de la virole.

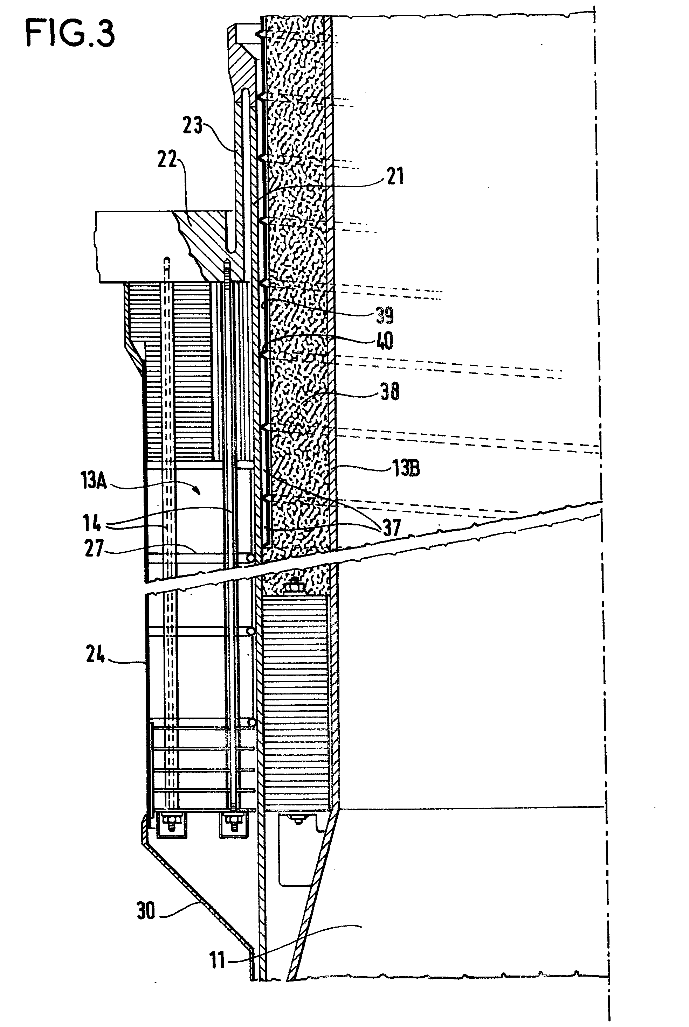

Dans le détail de la figure 3, il est disposé au contact de la virole 21 et à l'intérieur de celle-ci, un serpentin 37 de circulation d'un gaz d'échange de chaleur, tel que de l'air. Ce serpentin, délimité par une enveloppe 39 de calorifuge et des nervures 40, est séparé de la virole interne 13B par une couche 38 de calorifuge réduisant déjà dans une large mesure la transmission de chaleur du sodium secondaire réchauffé à la virole externe. Dans ce cas, le serpentin de circulation de gaz et le calorifuge coopèrent avec les couronnes de plaques pour assurer l'homogénéisation de température de la virole externe.

L'invention peut s'appliquer, en dehors des échangeurs du genre de ceux décrits dans les exemples, à d'autres appareils traversant la dalle surmontant le bain de métal alcalin liquide, tels que des pompes primaires ou des dispositifs de purification intégrés.

**Revendications**

1. Dispositif de réduction des écarts de température pouvant exister à un niveau donné entre des génératrices de position angulaire différente sur la virole verticale (21) d'un appareil baignant dans le bain (1) de métal alcalin liquide d'un réacteur nucléaire à neutrons rapides et traversant la dalle (2) surmontant ce bain, caractérisé en ce que ladite virole est munie de moyens d'homogénéisation de la température sur son pourtour comprenant une virole concentrique interne (13B) dont la température est uniforme sur son pourtour et une série de plaques métalliques (27) disposées perpendiculairement à l'axe de ladite virole (21) en couronnes horizontales échelonnées verticalement sur le pourtour de ladite virole, entre celle-ci et une chemise externe (24), et assurant en même temps une protection biologique contre le rayonnement radioactif, l'espace compris entre la virole (21) et la virole interne (13B) est rempli d'un gaz neutre.

2. Dispositif selon la revendication 1, destiné à supprimer les thermosiphons non axisymétriques qui s'établissent entre la virole (21) et la chemise externe (24) caractérisé en ce que les bords internes des plaques métalliques en couronnes (27) sont espacés de quelques millimètres de la virole (21) en ce que certaines des plaques métalliques (32) sont munies sur leur bord interne d'un joint métallique d'étanchéité (33), en ce que les plaques métalliques sont divisées en groupes comportant chacun une virole externe commune (34) espacée de quelques millimètres de la chemise externe (24), et en ce qu'entre deux groupes de plaques adjacentes est intercalée une plaque (35) munie d'un joint d'étanchéité (36) sur son bord externe.

3. Dispositif selon l'une des revendications 1 et 2, dans lequel ledit appareil est un échangeur de chaleur vertical entre un circuit primaire de métal alcalin liquide réchauffé dans le réacteur nucléaire et un circuit secondaire de métal alcalin liquide destiné à transmettre un flux de chaleur à un circuit de vapeur, caractérisé en ce qu'il comprend un serpentin de circulation (37) d'un gaz d'échange de chaleur au contact de la face interne de la virole (21) de l'échangeur, et une couche de calorifuge (38) entre lesdits moyens de circulation du gaz et la virole interne (13B) est destinée à améliorer l'homogénéisation circonférentielle de température de la virole (21).

**Claims**

1. A device for the reduction of temperature differences that may exist at a given level between generatrices having a different angular position of a vertical sleeve (21) of an apparatus dipping into a pool (1) of liquid alkali metal in a fast neutron reactor and passing through the horizontal closure member (2) over said pool, characterized in that said sleeve has a temperature-homogenization means around its circumference comprising a concentric internal sleeve (13B) whose temperature is uniform around its circumference, and a series of metal plates (27) disposed perpendicularly to the axis of said sleeve (21) as vertically-spaced horizontal rings around the circumference of said sleeve, between the latter and an external jacket (24), and simultaneously providing biological protection against radioactive radiation, the space between the sleeve (21) and the internal sleeve (13B) being filled with an inert gas.

2. A device according to Claim 1, adapted to suppress non-axially-symmetrical heat siphons between the sleeve (21) and the external jacket (24), characterized in that the internal edges of the annular metal plates (27) are spaced some millimetres from the sleeve (21), and in that certain of the metal plates (32) have a metal sealing member (33) at their internal rims, and in that the metal plates are divided into groups, each having a common external sleeve (34) spaced some millimetres from the external jacket (24), and in that a plate (35) having a sealing member (36) at its rim is interposed between adjacent groups of plates.

3. A device according to either of Claims 1 and 2, wherein said apparatus is a vertical heat exchanger between a primary circuit of liquid alkali metal heated in a nuclear reactor, and a secondary circuit of liquid alkali metal for transferring a flow of heat to a steam circuit, characterized in that it comprises a coil (37) for circulation of a heat exchange gas in contact with the internal surface of the sleeve (21) of the exchanger, and in that a layer of thermal insulation (38) between said gas-circulation means and the internal sleeve (13B) is provided to improve the circumferential homogenization of the temperature of the sleeve (21).

**Ansprüche**

1. Vorrichtung zur Verringerung von Temperaturunterschieden, welche in der vertikalen Umhüllung (21) einer Einrichtung auf einer vorgegebenen Höhe zwischen Mantellinien unterschiedlicher Winkellage auftreten können, wobei die Einrichtung in die Kühlflüssigkeit (1) aus flüssigem Alkalimetall eines Kernreaktors mit schnellen Neutronen eintaucht und sich durch die über dieser Kühlflüssigkeit angeordnete Platte (2) erstreckt, dadurch gekennzeichnet, daß die Umhüllung (21) über ihren Umfang mit Temperaturausgleichsmitteln versehen ist, welche eine innere, konzentrische Umhüllung (13B), deren Temperatur über ihren Umfang gleichmäßig ist, und einer Reihe von ringförmigen Metallplatten (27) umfassen, die senkrecht zur Achse der Umhüllung (21) in horizontalen Richtungen senkrecht zu dem Umfang der Umhüllung gestaffelt, zwischen dieser und einem äußeren Mantel (24) angeordnet sind, und gleichzeitig einen biologischen Schutz gegen radioaktive Strahlung bildet, wobei der zwischen der Umhüllung (21) und der inneren Umhüllung (13B) eingeschlossene Raum mit einem Neutralgas gefüllt ist.

2. Vorrichtung nach Anspruch 1, zum Unterdrücken nichtachsensymmetrischer Thermosiphons, die sich zwischen der Umhüllung (21) und dem äußeren Mantel (24) bilden, dadurch gekennzeichnet, daß die inneren Ränder der ringförmigen Metallplatten (27) einige Millimeter von der Umhüllung (21) abgerückt sind, daß gewisse Metallplatten (31) auf ihrem Innenrand mit metallischen Abdichtungen (33) versehen sind, daß die Metallplatten (27) in Gruppen eingeteilt sind, die jeweils eine gemeinsame äußere Umhüllung (34) umfassen, die einige Millimeter vom äußeren Mantel (24) abgerückt ist, und daß zwischen zwei benachbarten Gruppen von Platten eine Platte (35) eingefügt ist, die an ihrem äußeren Rand mit einer Abdichtung (36) versehen ist.

3. Vorrichtung nach Anspruch 1 oder 2, in welcher die Einrichtung ein vertikaler Wärmetauscher zwischen einem Primärkreislauf von in dem Kernreaktor wieder erhitzten, flüssigen Alkalimetall und einem Sekundärkreislauf von flüssigem Alkalimetall ist, das zum Übertragen eines Wärmeflusses zu einem Dampfkreislauf vorgesehen ist, dadurch gekennzeichnet, daß die Vorrichtung eine in Berührung mit der inneren Oberfläche der Umhüllung (21) des Wärmetauschers befindliche Strömungsschlange (37) für Wärmeaustauschgas umfaßt und daß eine Wärmedämmschicht (38) zwischen der Strömungseinrichtung für das Gas und der inneren Umhüllung (13B) dazu bestimmt ist, den Temperaturausgleich über den Umfang der Umhüllung (21) zu verbessern.

FIG.1

FIG.2

# FIG.3